# EUROPÄISCHE PATENTSCHRIFT

(11) **EP 2 165 101 B1**
(45) Veröffentlichungstag und Bekanntmachung des Hinweises auf die Patenterteilung: **27.02.2013**
(21) Anmeldenummer: 08773878.7
(22) Anmeldetag: 05.07.2008
(51) Int. Cl.: F16K 31/50

(54) **STELLANORDNUNG**
ACTUATING ARRANGEMENT
DISPOSITIF DE REGLAGE

(30) Priorität: 12.07.2007 DE 102007032863
(43) Veröffentlichungstag der Anmeldung: 24.03.2010
(73) Patentinhaber: Robert Bosch GmbH, 70469 Stuttgart (DE)
(72) Erfinder: MÜLLER, Andreas, 97737 Langenprozelten (DE); WARKUS, Manfred, 97816 Lohr am Main (DE)
(74) Vertreter: Thürer, Andreas
(86) Internationale Anmeldenummer: PCT/EP2008/005502
(87) Internationale Veröffentlichungsnummer: WO 2009/007071

(56) Entgegenhaltungen:
- US-A- 5 725 198

## Beschreibung

Die Erfindung betrifft eine Stellanordnung gemäß dem Oberbegriff des Patentanspruchs 1.

Mechanische Stellanordnungen, an denen ein Bediener typischerweise manuell eine Einstellung vornimmt, finden sich in vielen Bereichen der industriellen Automatisierungstechnik. In hydraulischen Anlagen finden sich solche manuelle Stellanordnungen häufig an Ventilen. Beispiele dafür sind z.B. die Stellschraube eines Druckbegrenzungsventils an denen ein maximaler Systemdruck vorgegeben wird oder die Stellschraube eines Drosselventils mit dem eine Geschwindigkeit eines hydraulischen Verbrauchers gesteuert wird.

Aus Sicherheitsgründen ist die Stellschraube nicht selbst mit einem unter hohen Druck stehenden Druckmittel beaufschlagt. Stattdessen wird meist ein zweiteiliger Aufbau verwendet, bei dem ein hydraulischer Steuerkörper, welcher mit Druckmittel beaufschlagt ist - ein Drosselkolben oder ein Sitzventilkolben - sich direkt oder über eine Feder an einer Einstellschraube abstützt. Eine Gehäuseschulter begrenzt die maximale zur Gehäuseaußenseite gerichtete Auslenkung des Steuerkörpers. So kann der Steuerkörper nicht durch das Druckmittel herausgeschleudert werden, selbst wenn die Einstellschraube vollständig aus dem jeweiligen Gewinde ihrer Gehäusebohrung herausgedreht wird. Die Gehäuseschulter ist oft durch eine Einschraubbuchse gebildet. Eine solche Konstruktion weist z.B. das in dem Datenblatt RD 27 506/02.03 beschriebene Drosselventil der Firma Bosch Rexroth AG auf.

Dieses herkömmliche Konstruktionsprinzip erfordert eine hohe Zahl an Bauteilen. Es sind mehrere radial versetzte Dichtstellen vorhanden. Die Montage und Prüfung gestaltet sich aufwendig.

Die DE 195 11 5256 C2 schlägt vor, eine Entlüftungsschraube eines Zylinders mit einer in eine gleiche Bohrung eingeschraubten Sicherungsschraube axial zu sichern. Das Werkzeug zum Lösen der Entlüftungsschraube greift durch eine Öffnung der Sicherungsschraube. Die Sicherungsschraube ist selbst nur mit einem Spezialwerkzeug lösbar. Bei der Sicherungsschraube handelt es sich um ein recht aufwendig gestaltetes Bauteil. Außerdem sind bei der Montage zwei verschiedene Werkzeuge vorzuhalten.

Die US 5,725,198, das die Merkmale des Oberbegriffs des Anspruchs 1 offenbart, zeigt eine Verstelleinrichtung für ein Nadelventil, dessen zentrale Einstellschraube in ein Gehäuse eingeschraubt ist und an einer Ventilnadel anliegt. Diese ist über eine Feder gegen die Einstellschraube vorgespannt. In einen Hals der Einstellschraube, der über eine Durchmesserverringerung gebildet ist, erstreckt sich zur Sicherung und zur Begrenzung des Verstellweges der Einstellschraube eine Stoppschraube.

Es ist Aufgabe der vorliegenden Erfindung, eine möglichst einfach aufgebaute Stellanordnung anzugeben.

Diese Aufgabe wird erfindungsgemäß durch eine Stellanordnung mit den Merkmalen des Patentanspruchs 1 gelöst.

Die erfindungsgemäße Stellanordnung besitzt ein Gehäuse, in dem eine erste Bohrung gebildet ist, welche in einem Teilbereich mit einem Gewinde versehen ist, einen in die erste Bohrung eingeschraubten, mittels des Gewindes axial verstellbaren, zylindrisch ausgebildeten Stellkörper und eine Sicherungseinrichtung, durch welche ein Entfernen des Stellkörpers aus der Bohrung blockierbar ist. Die Besonderheit dieser Stellanordnung ist es, dass die Sicherungseinrichtung einen am Stellkörper ausgebildeten radial vorspringenden Bund und einen mit dem Bund im Sinne eines mechanischen Anschlags zusammenwirkenden Stift umfasst, der in eine die erste Bohrung außermittig durchschneidende zweite Bohrung eingesetzt ist.

Dadurch kann ein Herausschrauben bzw. Herausfallen des Stellkörpers aus seiner Aufnahmebohrung zuverlässig verhindert werden. Die Stellanordnung besitzt vorwiegend einfach herstellbare Bauteile. Die Montage und Wartung benötigen nur wenig Zeit. Lediglich am Stellkörper wird eine Dichtung benötigt. Der Stift kann in einem druckmittelfreien Bereich angeordnet werden.

Weitere vorteilhafte Ausgestaltungen sind in den Unteransprüchen angegeben.

Wenn der Stift mit dem Stellkörper einen rechten Winkel einschließt, sind der Stellkörper und der Stift von verschiedenen Oberflächen des Gehäuses aus einfach einzusetzen. Zudem tritt am Stift nur eine Belastung senkrecht zu seiner Aufnahmebohrung auf, falls er durch den Bund des Stellkörpers belastet wird. Ein Herausschieben des Stifts und ein vorzeitiger Verschleiß wird so vermieden.

Vorzugsweise ist am Stellkörper ein zweiter Bund vorhanden, an welchem durch den Stift eine Einschraubtiefe des Stellkörpers in der ersten Bohrung begrenzt ist. Dadurch lässt sich an der erfindungsgemäßen Stellanordnung sowohl eine Sicherung gegen eine Entnahme des Stellkörpers als auch ein Tiefenanschlag mit geringem konstruktivem Aufwand vorsehen.

Für eine verliersichere Montage kann der Stift in die zweite Bohrung eingepresst sein. Es kann aber auch eine die zweite Bohrung verschließende Abdeckung vorhanden sein. Die zweite Bohrung kann ggf. als Sacklochbohrung ausgeführt sein, so dass nur eine Abdeckung benötigt wird. Außerdem bzw. alternativ kann die zweite Bohrung durch einen Stopfen aus einem Vergussmaterial - z.B. einem Kunstharz - verschlossen werden.

Wenn der Stellkörper eine radial ausgerichtete Fläche aufweist, an der er mit einem unter Druck stehenden Druckmittel beaufschlagbar ist, verhindert der Stift ein Herausschleudern des Stellkörpers durch das Druckmittel und trägt dadurch zur Arbeitssicherheit bei.

Eine besonders bevorzugte Ausgestaltung der vorliegenden Erfindung betrifft eine Stellanordnung, welche als ein hydraulisches Drosselventil ausgebildet ist. Dabei ist ein einstückig ausgebildeter mit einem Außengewinde versehender Drosselbolzen in eine mit einem Innengewinde versehene Aufnahmebohrung eingeschraubt. Die Aufnahmebohrung schneidet sich mit einem in dem Gehäuse des Drosselventils ausgeführten Fluidkanal, durch den Drosselbolzen ist ein Durchflussquerschnitt des Fluidkanals steuerbar, an dem Drosselbolzen ist ein radial zurückspringender Halsbereich gebildet, und ein in eine die Aufnahmebohrung außermittig durchschneidende zweite Bohrung eingesetzter Stift wirkt mit dem Halsabschnitt im Sinne einer axialen Wegbegrenzung des Drosselbolzens zusammen. Auf diese Weise lässt sich ein besonders einfach aufgebautes, in der Funktion zuverlässiges und gegen ein Herausschleudern des Drosselbolzens gesichertes Drosselventil darstellen. Das vorbeschriebene Drosselventil kann als eigenständiger Anmeldegegenstand betrachtet werden.

Auf einfache Weise lässt sich durch die Wegbegrenzung eine vorgegebene Mindestüberdeckung des Außengewindes und des Innengewindes sicherstellen und so die Sicherheit des Bedieners gewährleisten.

Nachfolgend werden die vorliegende Erfindung und deren Vorteile unter Bezugnahme auf das in den Figuren dargestellte Ausführungsbeispiel näher erläutert.

Es zeigen:
- Fig. 1: ein Schnittbild eines Drosselventils, in welchem die erfindungsgemäße Stellanordnung konstruktiv verwirklicht ist, und
- Fig. 2: einen Schnitt entlang der Linie B-B des in Figur 1 dargestellten Drosselventils.

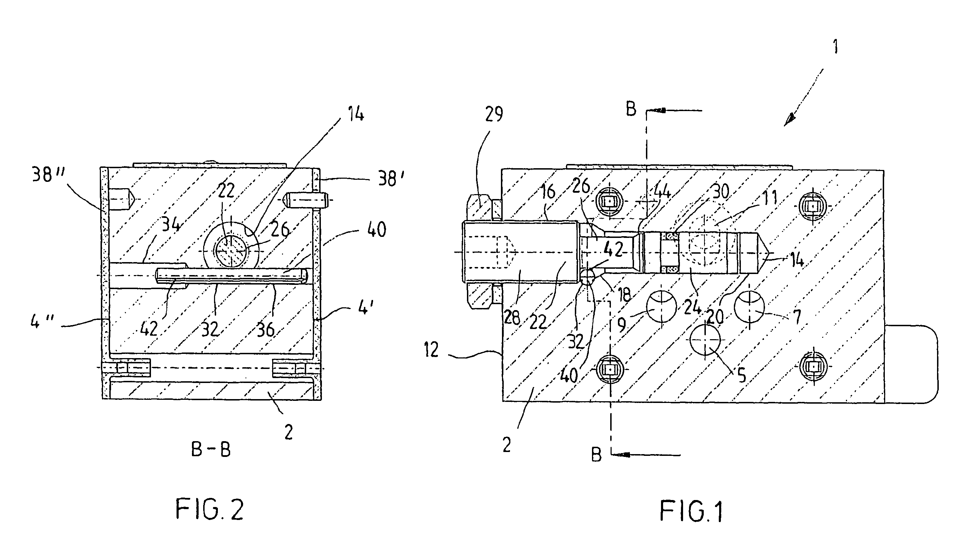

In der Figur 1 ist ein als Zwischenplattenventil ausgeführtes Drosselventil 1 dargestellt. Durch die Platte 2 verlaufen Druckmittelkanäle 5, 7, 9 und 11 von einer oberen zu einer unteren Anschlussfläche 4', 4" (Figur 2). Von einer senkrecht zu den Anschlussflächen 4', 4" ausgerichteten Seitenfläche 12 ist eine gestufte Sacklochbohrung 14 eingebracht. Die Sacklochbohrung 14 schneidet sich mit dem Druckmittelkanal 11.

In einem Mündungsabschnitt 16 ist die Sacklochbohrung 14 mit einem Innengewinde versehen. An den Mündungsabschnitt 16 schließt ein Übergangsabschnitt 18 an, in dem sich die Sacklochbohrung 14 verengt und in einen geraden länglichen Endabschnitt 20 übergeht.

In die Sacklochbohrung 14 ist ein Drosselbolzen 22 eingesetzt. Der Drosselbolzen ist einstückig ausgebildet und besitzt einen Steuerabschnitt 24, welcher in den Endabschnitt 20 der Sacklochbohrung 14 vorsteht und durch seine Überdeckung mit dem Druckmittelkanal 11 den Durchflussquerschnitt des Druckmittelkanals 11 bestimmt. Weiter sind ein Halsabschnitt 26, an dem sich der Querschnitt des Drosselbolzens verjüngt, und ein Gewindeabschnitt 28, an dem der Drosselbolzen 22 axial verstellbar in das Innengewinde des Mündungsabschnitts 16 der Sacklochbohrung 14 eingeschraubt ist, vorgesehen. An dem dem Halsabschnitt 26 zugewandten Ende des Steuerabschnitts 24 ist eine Ringnut zur Aufnahme eines Dichtrings 30 vorgesehen. Vom Halsabschnitt 26 aus betrachtet vergrößert sich der Durchmesser des Drosselbolzens jeweils am Übergang zum Gewindeabschnitt 28 an einer Schulter und am Übergang zum Steuerabschnitt 24 an einer radialen Aufweitung 44. Auf den Drosselbolzen 22 ist an dem aus der Sacklochbohrung 14 herausragenden Gewindeabschnitt 28 eine Kontermutter 29 aufgeschraubt.

Senkrecht zu der Sacklochbohrung 14 ist eine weitere die Platte 2 durchquerende Stufenbohrung 32 ausgeführt, wie unter Anderem in Figur 2 gezeigt. Die Stufenbohrung 32 verläuft im Wesentlichen parallel zu den Druckmittelkanälen 5, 7, 9 und 11. Sie schneidet die Sacklochbohrung 14 in einem Bereich zwischen dem Mündungsabschnitt 16 und dem Übergangsabschnitt 18 außermittig, genauer gesagt im Randbereich der Sacklochbohrung 14. Die Stufenbohrung 32 besitzt einen Einführabschnitt 34 sowie einen gegenüber dem Einführabschnitt 34 verengten Aufnahmeabschnitt 36. Der Aufnahmeabschnitt 36 dient der Aufnahme eines Anschlagsstifts 40. Durch Abdeckplatten 38' und 38" können die Öffnungen der Stufenbohrung 32 verschlossen werden, um den Anschlagsstift 40 verliersicher zu halten. Zusätzlich ist der Anschlagsstift 40 mit Längskerben 42 versehen und mit leichtem Übermaß gegenüber dem Aufnahmeabschnitt 36 gefertigt. Dadurch lässt sich der Anschlagsstift 40 verliersicher in den Aufnahmeabschnitt 36 einpressen.

Bei der Montage des Drosselventils 1 wird der Drosselbolzen 22 in die Sacklochbohrung 14 eingeschraubt. Nachdem der Halsabschnitt 26 mit der Stufenbohrung 32 zur Überdeckung gebracht ist, wird der Anschlägsstift 40 in die Stufenbohrung 32 eingesetzt bzw. eingepresst. Der Anschlagsstift 40 wirkt mit dem Halsabschnitt 26 derart zusammen, dass er für die Schulter des Drosselbolzens am Übergang zum Gewindeabschnitt 28 einen Tiefenanschlag bildet, der die Einschraubtiefe des Drosselbolzens 22 begrenzt. Weiterhin bildet der Anschlagsstift 40 mit der radialen Aufweitung 44 des Drosselbolzens 22 am Übergang zum Steuerabschnitt 24 eine Entnahmesicherung, welche ein zu weites Herausdrehen des Drosselbolzens 22 aus der Sacklochbohrung 22 verhindert. Der Längsabstand zwischen der besagten radialen Aufweitung 44 und dem Dichtring 30 ist groß genug, um auch bei einem Anliegen der Aufweitung 44 am Anschlagstift 40 ein Austreten von Druckmittel aus dem Druckmittelkanal 11 bzw. der Sacklochbohrung 14 zu verhindern.

Das Drosselventil 1 wird üblicherweise als Zwischenplatte zwischen Ventile oder andere hydraulische Anschlussplatten in Höhenverkettung montiert. Dabei entfallen die Abdeckplatten 38' und 38". An ihre Stelle treten besagte Ventile oder Anschlussplatten. In diesem montierten Zustand ist das Drosselventil 1 sehr gut gegen unsachgemäße Bedienung und gegen Manipulation gesichert, da der Anschlagstift 40 von außen nicht zugänglich ist.

### Bezugszeichenliste

- 1: Drosselventil
- 2: Platte
- 4': Anschlussfläche
- 4": Anschlussfläche
- 5: Druckmittelkanal
- 7: Druckmittelkanal
- 9: Druckmittelkanal
- 11: Druckmittelkanal
- 12: Seitenfläche
- 14: Sacklochbohrung
- 16: Mündungsabschnitt
- 18: Übergangsabschnitt
- 20: Endabschnitt
- 22: Drosselbolzen
- 24: Steuerabschnitt
- 26: Halsabschnitt
- 28: Gewindeabschnitt
- 29: Kontermutter
- 30: Dichtring
- 32: Stufenbohrung
- 34: Einführabschnitt
- 36: Aufnahmeabschnitt
- 38': Abdeckplatte
- 38": Abdeckplatte
- 40: Anschlagstift
- 42: Längskerbe
- 44: Radiale Aufweitung

## Patentansprüche

1. Stellanordnung, insbesondere zur manuellen Betätigung, mit einem Gehäuse (2), in dem eine erste Bohrung (14) gebildet ist, welche in einem Teilbereich mit einem Gewinde versehen ist, mit einem in die erste Bohrung eingeschraubten, mittels des Gewindes axial verstellbaren, zylindrisch ausgebildeten Stellkörper (22) und mit einer Sicherungseinrichtung, durch welche ein Entfernen des Stellkörpers (22) aus der Bohrung (14) blockierbar ist, wobei die Sicherungseinrichtung einen am Stellkörper (22) ausgebildeten radial vorspringenden Bund (24, 44) und einen mit dem Bund (24, 44) im Sinne eines mechanischen Anschlags zusammenwirkenden Stift (40) umfasst, **dadurch gekennzeichnet dass**, der Stift (40) in eine die erste Bohrung (14) außermittig durchschneidende zweite Bohrung (32) eingesetzt ist.

2. Stellanordnung nach Anspruch 1, **dadurch gekennzeichnet, dass** der Stift (40) mit dem Stellkörper (22) einen rechten Winkel einschließt.

3. Stellanordnung nach Anspruch 1 oder 2, **dadurch gekennzeichnet, dass** der Stellkörper (22) einen zweiten Bund (28) umfasst, an welchem durch den Stift (40) eine Einschraubtiefe des Stellkörpers (22) in der ersten Bohrung (14) begrenzt ist.

4. Stellanordnung nach einem der vorhergehenden Ansprüche, **dadurch gekennzeichnet, dass** der Stift (40) in die zweite Bohrung (32) eingepresst ist.

5. Stellanordnung nach einem der vorhergehenden Ansprüche, **dadurch gekennzeichnet, dass** eine die zweite Bohrung (32) verschließende Abdeckung (38', 38") vorhanden ist.

6. Stellanordnung nach einem der vorhergehenden Ansprüche, **dadurch gekennzeichnet, dass** der Stellkörper (22) eine radial ausgerichtete Fläche
aufweist, an der er mit einem unter Druck stehenden Druckmittel beaufschlagbar ist.

7. Stellanordnung nach einem der vorhergehenden Ansprüche, **dadurch gekennzeichnet, dass** diese als ein hydraulisches Drosselventil (1) ausgebildet ist, bei dem ein einstückig ausgebildeter mit einem Außengewinde versehender Drosselbolzen (22) in eine mit einem Innengewinde versehene Aufnahmebohrung (14) eingeschraubt ist, bei dem die Aufnahmebohrung (14) sich mit einem in dem Gehäuse (2) des Drosselventils (1) ausgeführten Fluidkanal (11) schneidet, bei dem durch den Drosselbolzen (22) ein Durchflussquerschnitt des Fluidkanals (11) steuerbar ist, bei dem an dem Drosselbolzen (22) ein radial zurückspringender Halsbereich (26) gebildet ist und bei dem der Stift (40) mit dem Halsabschnitt (26) im Sinne einer axialen Wegbegrenzung des Drosselbolzens (22) zusammenwirkt.

8. Stellanordnung nach Anspruch 7, **dadurch gekennzeichnet, dass** durch die Wegbegrenzung eine vorgegebene Mindestüberdeckung des Außengewindes und des Innengewindes sichergestellt ist.

## Claims

1. Actuating arrangement, in particular for manual actuation, having a housing (2) in which a first bore (14) provided in a partial region with a thread is formed, having a cylindrically formed actuating body (22) which is screwed into the first bore and can be axially adjusted by means of the thread, and having a securing device by which removal of the actuating body (22) from the bore (14) can be blocked, wherein the securing device comprises a radially projecting collar (24, 44) formed on the actuating body (22) and a pin (40) which interacts with the collar (24, 44) with the effect of a mechanical stop, **characterized in that** the pin (40) is inserted into a second bore (32) which eccentrically intersects the first bore (14).

2. Actuating arrangement according to Claim 1, **characterized in that** the pin (40) includes a right angle with the actuating body (22).

3. Actuating arrangement according to Claim 1 or 2, **characterized in that** the actuating body (22) comprises a second collar (28), at which a screw-in depth of the actuating body (22) into the first bore (14) is limited by the pin (40).

4. Actuating arrangement according to one of the preceding claims, **characterized in that** the pin (40) is pressed into the second bore (32).

5. Actuating arrangement according to one of the preceding claims, **characterized in that** there is a cover (38', 38'') which closes off the second bore (32).

6. Actuating arrangement according to one of the preceding claims, **characterized in that** the actuating body (22) has a radially oriented face, at which it can be subjected to a pressurized pressure medium.

7. Actuating arrangement according to one of the preceding claims, **characterized in that** it is in the form of a hydraulic restrictor valve (1), in which a restrictor bolt (22) formed in one piece and provided with an outer thread is screwed into a receiving bore (14) provided with an inner thread, in which the receiving bore (14) intersects with a fluid channel (11) formed in the housing (2) of the restrictor valve (1), in which a cross section of flow through the fluid channel (11) can be controlled by the restrictor bolt (22), in which a radially recoiling neck region (26) is formed on the restrictor bolt (22), and in which the pin (40) interacts with the neck portion (26) with the effect of limiting the axial travel of the restrictor bolt (22).

8. Actuating arrangement according to Claim 7, **characterized in that** the travel limitation ensures a predefined minimum overlap of the outer thread and of the inner thread.

## Revendications

1. Système de réglage, notamment destiné à être actionné manuellement, comprenant un boîtier (2), dans lequel est formé un premier alésage (14) qui est pourvu, dans une région partielle, d'un filetage, un corps de réglage (22) vissé dans le premier alésage, réalisé sous forme cylindrique et déplaçable axialement au moyen du filetage, et un dispositif de fixation qui permet d'empêcher que le corps de réglage (22) ne ressorte de l'alésage (14), le dispositif de fixation comprenant un épaulement (24, 44) saillant radialement et réalisé sur le corps de réglage (22) et une goupille (40) coopérant avec l'épaulement (24, 44) pour former une butée mécanique, **caractérisé en ce que** la goupille (40) est insérée dans un deuxième alésage (32) coupant le premier alésage (14) de manière décentrée.

2. Système de réglage selon la revendication 1, **caractérisé en ce que** la goupille (40) forme un angle droit avec le corps de réglage (22).

3. Système de réglage selon la revendication 1 ou 2, **caractérisé en ce que** le corps de réglage (22) comprend un deuxième épaulement (28) au niveau duquel une profondeur de vissage du corps de réglage (22) dans le premier alésage (14) est limitée par la goupille (40).

4. Système de réglage selon l'une quelconque des revendications précédentes, **caractérisé en ce que** la goupille (40) est enfoncée par pressage dans le deuxième alésage (32).

5. Système de réglage selon l'une quelconque des revendications précédentes, **caractérisé en ce qu'**il est prévu un recouvrement (38', 38") fermant le deuxième alésage (32).

6. Système de réglage selon l'une quelconque des revendications précédentes, **caractérisé en ce que** le corps de réglage (22) présente une surface orientée radialement au niveau de laquelle il peut être sollicité par un fluide de pression sous pression.

7. Système de réglage selon l'une quelconque des revendications précédentes, **caractérisé en ce que** celui-ci est réalisé sous forme de vanne d'étranglement hydraulique (1), dans laquelle un boulon d'étranglement (22) réalisé d'une seule pièce et pourvu d'un filetage extérieur est vissé dans un alésage de réception (14) pourvu d'un filetage intérieur, dans laquelle l'alésage de réception (14) coupe un canal de fluide (11) réalisé dans la boîtier (2) de la vanne d'étranglement (1), dans laquelle une section transversale d'écoulement du canal de fluide (11) peut être commandée par le boulon d'étranglement (22), dans laquelle une région de col (26) faisant saillie radialement en arrière est formée sur le boulon d'étranglement (22) et dans laquelle la goupille (40) coopère avec la portion de col (26) pour former une limitation axiale de la course du boulon d'étranglement (22).

8. Système de réglage selon la revendication 7, **caractérisé en ce que** la limitation de course garantit un recouvrement minimal prédéfini du filetage extérieur et du filetage intérieur.
